# EUROPEAN PATENT APPLICATION

(11) **EP 3 736 965 A1**
(43) Date of publication of application: **11.11.2020**
(21) Application number: 19173678.4
(22) Date of filing: 10.05.2019
(51) Int. Cl.: H02N 2/00

(54) **DRIVE UNIT AND METHOD FOR OPERATING A DRIVE UNIT**

(71) Applicant: MINISWYS SA, 2502 Biel (CH)
(72) Inventor: HOESLI, Raphaël, 2560 Nidau (CH); ROTEN, Maxime, 2063 Fenin (CH); BRUMANN, Michaël, 2503 Bienne (CH); BAUME, Loann, 2000 Neuchâtel (CH)
(74) Representative: Frei Patent Attorneys

(57) **Abstract**

A oscillating drive unit for driving a passive element (4) relative to an active element (1) comprises a resonator (2) with at least two arms (21, 22) extending in parallel to a reference plane (28), one of the arms (21, 22) comprising, a contact element (31) movable by way of oscillating movements, for driving the passive element (4) relative to the active element (1). The at least two arms (21, 22) extend in a substantially symmetric manner, and the other one of the arms (21, 22) is arranged not to come into contact with the passive element (4).

## Description

The invention relates to the field of miniaturised drives, for example piezoelectric drives. More particularly, it relates to a drive unit and a method for operating a drive unit as described in the preamble of the corresponding independent claims.

Such drives are disclosed, for example, in the applicant's WO 2006/000118 A1 or US 7'429'812 B2. There is a need for further improvement of such drives, in particular by simplifying their construction and making them better suited for miniaturisation and mass production.

It is therefore an object of the invention to create a drive unit of the type mentioned initially, with a simplified construction and/or increased performance, and a method for operating such a drive unit.

These objects are achieved by a drive unit and a method for operating a drive unit according to the claims.

According to a **first** aspect of the invention, a drive unit for driving a passive element relative to an active element is provided, wherein the active element comprises
a resonator and at least one excitation means for exciting oscillations in the resonator, the resonator comprising at least two arms extending from a connection region of the resonator,
the connection region and the arms extending in parallel to a reference plane,
a first arm of the arms comprising, at an outer end of the arm, a contact element,
the contact element being movable by way of oscillating movements of the first arm, the passive element being arranged to be driven and moved relative to the active element by way of these oscillating movements;
the passive element comprises a first contact area, the first contact area being arranged to be in contact with the first contact element.
Therein the at least two arms extend in a substantially symmetric manner from the connection region;
the resonator and its parts are integrally shaped as a single piece of material;
and the second arm is arranged not to come into contact with the passive element.

The invention according to the **first** aspect can be implemented alone or in combination with the invention according to one or more of the other aspects.

Thus, the second arm does not drive the passive element. By having only one arm driving the passive element, one or more of the following becomes possible:
- A rotary drive can be configured to have a further arm that acts as a bearing, opposite of the first arm, for the passive element, and does not impart a torque driving the passive element. The further arm and the driving arm can be in the same (reference) plane as the resonator, simplifying the construction.
- A pre-stress force, acting in parallel to the reference plane or resonator plane, can be applied, e.g. by such a further arm, and can also act on a driven part.
- A linear drive can be configured to have an arbitrary long range of linear motion within the plane of the resonator, as opposed to a drive in which the passive element moves between two arms of the active element in said plane.

Typically, the movement of the contact element is of a generally elliptic shape, and a direction of the movement - clockwise or counter clockwise, seen in a projection onto the reference plane - can be controlled by an excitation frequency of the excitation means, as explained in the applicant's prior WO 2006/000118 A1 or US 7'429'812 B2.

In embodiments, the resonator and its parts are manufactured of a single piece of sheet material, in particular, sheet metal.

In embodiments, the second arm is arranged to move with oscillating movements that balance the oscillating movement of the first arm.

That is, when the excitation means is excited with a frequency for driving the passive element relative to the active element, the first arm and second arm vibrate with movements that balance one another.

A resonator of the kind presented here typically has a resonator axis that corresponds to an axis of symmetry of the geometric shape of the resonator. For a resonator of generally planar shape, the resonator axis lies in its reference plane. The symmetry relative to the resonator axis is understood to correspond to the general shape of the arms, and may not be perfect with regard to details of the shape of the arms.

Thus, while the at least two arms extend in a substantially symmetric manner from the connection region, they can differ in details of their shape or contour. For example, one arm can be shorter than the other, measured in the direction in which the arms extend. For example, it can be up to 10% or up to 20% or up to 30% or up to 40% shorter than the other arm.

The arms being arranged symmetrically to one another, with regard to the resonator axis or to a point of symmetry, allows movements of the arms, when they oscillate, to balance each other. As a result, the oscillating movement of the resonator can be made essentially symmetric with respect to the resonator axis.

In embodiments, one or more attachment regions at which the resonator is attached to another element that carries the resonator, lie on the resonator axis.

In embodiments, the centre of the excitation means lies on the resonator axis (both being projected onto the reference plane).

In embodiments, the resonator axis corresponds to areas of the resonator where, in operation of the active element, the amplitudes of oscillation are lowest.

In embodiments, the first arm and second arm are arranged in 2-fold rotational symmetry to one another, with an axis of symmetry being normal to the reference plane.

2-fold rotational symmetry is a special case of axisymmetry, in which a body is matched with itself by a0° rotation about the axis of symmetry.

In embodiments, the first arm and second arm are arranged in mirror symmetry to one another, with a mirror plane being normal to the reference plane, the first arm and second arm being arranged at opposite sides of the mirror plane and
- either the first arm and second arm extend in a direction normal to the mirror plane,
- or the first arm and second arm extend in a direction normal to the mirror plane.

In embodiments, the mirror plane comprises the resonator axis. In this case, it is also the case that the first arm and second arm are arranged at opposite sides of the resonator axis and extend - depending on the embodiment - in a direction parallel to or perpendicular to the resonator axis, respectively.

In embodiments, the passive element is arranged to move with a linear movement when driven by the first arm.

In embodiments, the passive element is arranged to move with a rotary movement when driven by the first arm.

In embodiments, the active element comprises, in addition to the first arm and second arm, a bearing arm, the bearing arm comprising a bearing region by means of which, in particular when the active element is not being excited, the bearing arm applies a pre-stress force on the passive element against the first arm, in particular the first contact element of the first arm.

The pre-stress force can be generated by a permanent deformation of the bearing arm, in particular by flexion, torsion and/or shearing of the bearing arm.

In embodiments, when the active element is excited, with a frequency for driving the passive element relative to the active element by means of the first arm, the bearing arm oscillates without imparting forces to the passive element that drive the passive element relative to the active element.

In embodiments, when the active element is excited, with a frequency for driving the passive element relative to the active element by means of the first arm, a bearing region of the oscillating bearing arm alternatingly moves towards the passive element, thereby coming into contact with the passive element, and away from the passive element, thereby losing contact with the passive element.

In embodiments, when the excitation means is excited with a frequency for driving the passive element relative to the active element by means of the first arm, the bearing arm comprises at least three nodes of oscillation.

The bearing arm is distinct from the second arm and from the first arm. In other words, the bearing arm and second arm and first arm are not the same arm.

In embodiments, the bearing region comprises bearing fingers between which the passive element is arranged.

In embodiments, the connection region is substantially of rectangular shape. The excitation means typically is substantially rectangular as well. Sides of a rectangle corresponding with a rectangular approximation of the connection region can be aligned in parallel with sides of a rectangle corresponding with a rectangular approximation of the excitation means.

The resonator and its parts being integrally shaped means, in other words, that the parts of the resonator, such as the connection region, first and second arms, attachment regions, and optionally a bearing arm are manufactured as a single part with the resonator. This can be done, for example, by stamping or cutting the resonator from a piece of sheet metal, or by casting, or by an additive manufacturing process.

The method for operating a drive unit comprises the steps of exciting the active element with a frequency for driving the passive element relative to the active element by means of the first arm by performing an oscillating movement that, and for intermittently holding and releasing the passive element relative to the active element by means of the bearing arm.

Depending on the frequency, the active element can drive the passive element to move in a first direction, or in a second direction opposite to the first direction. In embodiments, the movement by the passive element is a translational movement. In others, it is a rotational movement.

According to a **second** aspect of the invention, a drive unit for driving a passive element relative to an active element is provided, wherein the active element comprises a resonator and at least one excitation means for exciting oscillations in the resonator, the resonator comprising at least one arm extending from a connection region of the resonator,
the connection region and the at least one arm extending in parallel to a reference plane,
the at least one arm comprising, at an outer end of the arm, a contact element,
the contact element being movable by way of oscillating movements of the at least one arm,
the passive element being arranged to be driven and moved relative to the active element by way of these oscillating movements;
the passive element comprises a first contact area, the first contact area being arranged to be in contact with the first contact element.
Therein a resilient pre-stress element is arranged to apply a pre-stress force pushing, in particular when the active element is not being excited, at least the first contact element towards the first contact area, and in that
the passive element is held in place against the active element by means of the pre-stress force.

The invention according to the **second** aspect can be implemented alone or in combination with the invention according to one or more of the other aspects.

Thus, the pre-stress force acts not only between the active element and passive element, improving the driving effect of the oscillating movement of the one or more arms, but also allows to simplify the construction of the drive, and in particular of a joint between the active element and passive element, typically between a base element and a driven part on which the active element and passive element are mounted.

The passive element being held in place means that if it were not for the pre-stress force, the passive element - and optionally further elements connected to the passive element - would be free to move out of its or their place relative to the active element.

In other words, without the pre-stress force acting, the active element and passive element would fall apart.

In embodiments, the passive element and the active element are arranged to move a driven part relative to a base element, the driven part being partly constrained in its movement relative to the base element by means of a joint, and the driven part is held in the joint by means of the pre-stress force. Again: without the pre-stress force, the base element and driven part would be free to move out of their place relative to one another.

In embodiments, the pre-stress force acts within the resonator plane, and thus in parallel to the reference plane.

Generally, not only one but two or more drive units can be arranged to move a driven part relative to a base element.

In embodiments, the joint is a rolling joint comprising rollers arranged between the base element and the driven part.

The rollers can be, for example, spherical, cylindrical or barrel-shaped rollers.

In embodiments, the pre-stress force acts on all the rollers of the rolling joint.

In other words, all the rollers are arranged at locations where the pre-stress force pushes the active element and the passive element towards one another.

In embodiments, the joint is a rotary joint, a linear joint or a planar joint.

In embodiments, the joint allows for relative movement of the driven part relative to the base element along a linear axis or within a plane, and limits the relative movement in a direction that is normal to said linear axis or plane, and does not constrain the relative movement in the opposite direction, and wherein the pre-stress force constrains the relative movement in the opposite direction.

In embodiments, the joint allows for relative movement of the driven part relative to the base element around an axis of rotation, and limits the relative movement in a direction that is normal to said axis of rotation, and does not constrain the relative movement in the opposite direction, and wherein the pre-stress force constrains the relative movement in the opposite direction.

According to a **third** aspect of the invention, a drive unit for driving a passive element relative to an active element is provided, wherein the active element comprises
a resonator and at least one excitation means for exciting oscillations in the resonator, the resonator comprising at least two arms extending from a connection region of the resonator,
the connection region and the arms extending in parallel to a reference plane,
each of the arms comprising, at an outer end of the arm, a respective contact element, the contact elements being movable by way of oscillating movements of the respective arm
the passive element being arranged to be driven and moved relative to the active element by way of these oscillating movements;
the passive element comprises a first and a second contact area, each contact area, being arranged to be in contact with a respective one of the first and second contact elements.
Therein the resonator comprises
a pivot section about which the resonator is arranged to rotate relative to the base element,
a counterforce section comprising a resilient part of the resonator, which when mounted on the base element is elastically deformed by a pre-stress torque around the pivot section, caused by a pre-stress force acting between the resonator and the passive element at the contact areas.

The invention according to the **third** aspect can be implemented alone or in combination with the invention according to one or more of the other aspects.

This makes it possible to simplify construction of the drive and associated parts, in particular for miniaturisation of the drive.

In embodiments, when no external forces are applied to the resonator and its arms they extend in parallel to the reference plane. When mounted in another element, such as the base element and/or when in contact with the passive element, parts of the resonator, in particular its arms and/or counterforce sections can be elastically deformed and moved out of the reference plane. Correspondingly, the pre-stress force can act at an angle to the resonator or the reference plane. The angle can be more than 75°, more than 85° and in particular a right angle.

In embodiments, the resonator can be manufactured as a flat object, with all its elements in parallel to the reference plane, and can then be plastically deformed prior to being mounted with other elements of the drive unit.

In embodiments, the counterforce section, in particular when not deformed, extends within the reference plane at the same side of the pivot section as the arms.

In embodiments, the counterforce section, in particular when not deformed, extends within the reference plane at the opposite side of the pivot section as the arms.

In embodiments, the counterforce section, in particular when not deformed, extends at an angle to the reference plane.

According to a **fourth** aspect of the invention, a drive unit for driving a passive element relative to an active element is provided, wherein the active element comprises
a resonator and at least one excitation means for exciting oscillations in the resonator, the resonator comprising at least two arms extending from a connection region of the resonator,
the connection region and the arms extending in parallel to a reference plane,
at least one of the arms comprising, at an outer end of the arm, a contact element,
the contact element being movable by way of oscillating movements of the at least one of the arms,
the passive element being arranged to be driven and moved relative to the active element by way of these oscillating movements;
the passive element comprises at least one contact area, the at least one contact area being arranged to be in contact with a respective contact element.
Therein the at least one contact area has a concave shape, with two inner surfaces opposing one another, with the respective contact element being arranged to move between the two inner surfaces and make contact at the two inner surfaces.

The invention according to the **fourth** aspect can be implemented alone or in combination with the invention according to one or more of the other aspects.

This makes it possible to move parts, to which the active and passive element relative are attached, relative to one other in a direction normal to a linear movement axis of the drive. Thereby, the contact element is held between the concave part and so does not lose contact.

In embodiments, the at least one contact area has a U-shape, with two arms, and wherein the respective contact element is arranged to move between the two arms of the U-shape and make contact at inner surfaces of the two arms of the U-shape.

In embodiments the at least one contact area is manufactured in one piece as a bent piece of sheet metal.

In general, for all aspects, it can be the case that a width of the first and second arms is more that 10% and less than 60% or less than 40% of a width of the connection region, measured in the same direction as the width of the arms and in parallel to the reference plane.

In general, for all aspects, it can be the case that a length of the first and second arms is more than 20%, or more than 40% or more than 60% or more than 80% or more than 100% of a length of the connection region, measured in the same direction as the length of the arms and in parallel to the reference plane.

In general, for all aspects, it can be the case that the connection region and an excitation means have an area, when projected onto the reference plane, of less than a hundred or less than fifty or less than twenty-five square millimetres.

Further embodiments are evident from the dependent patent claims. Features of the method claims may be combined with features of the device claims and vice versa.

The subject matter of the invention will be explained in more detail in the following text with reference to exemplary embodiments which are illustrated in the attached drawings, which schematically show:
- Figure 1: a drive with an active element comprising a resonator with a pair of arms, of which only one is in contact with and drives a passive element;
- Figure 2: a resonator with a pair of arms in a different arrangement;
- Figure 3: a drive with an additional arm acting as a bearing;
- Figure 4-6: different arrangements of arms for this type of drive;
- Figure 7-9: different arrangements with pre-stress elements;
- Figure 10-12: views of a drive unit in which a pre-stress force holds a base element and a driven part together;
- Figure 13: a resonator with an integral counterforce section for generating the pre-stress force;
- Figure 14-16: different configurations of the counterforce section;
- Figure 17: a drive unit in which the active element contacts and drives a concave region of the passive element; and
- Figure 18: the same, in an exploded view.

In principle, identical or functionally identical parts are provided with the same reference symbols in the figures.

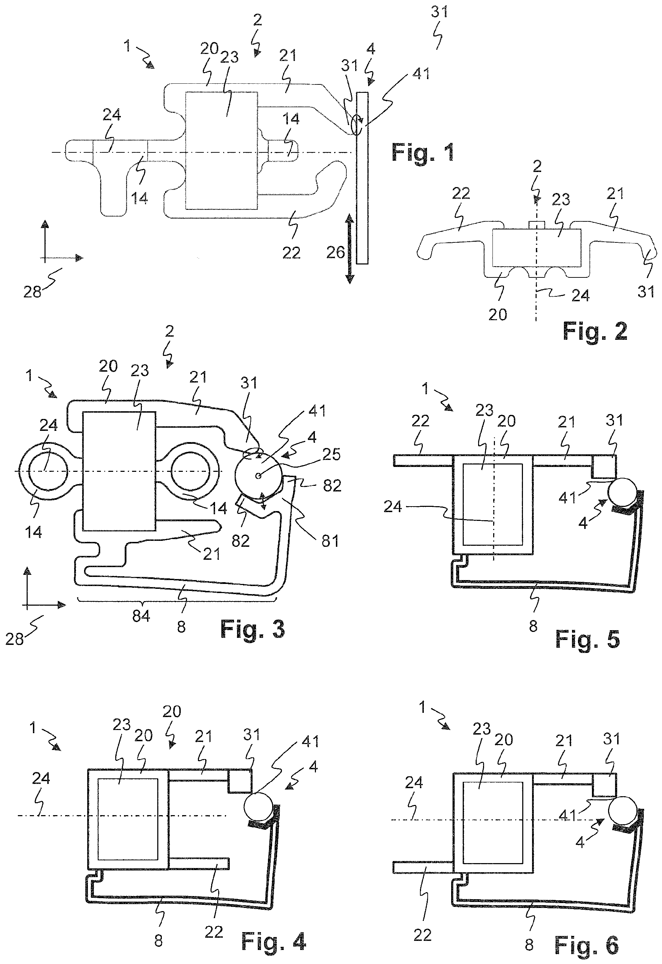

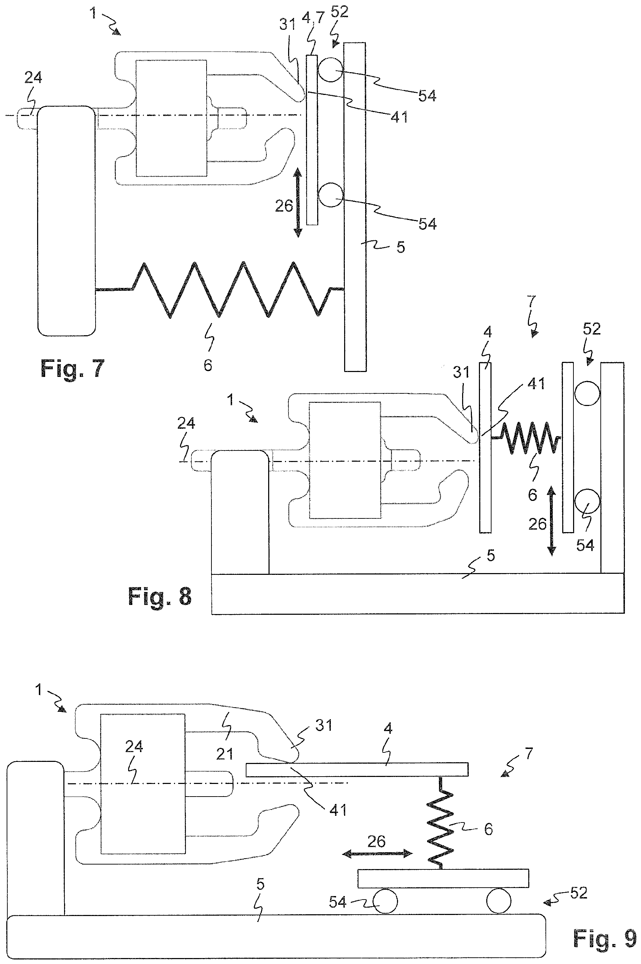

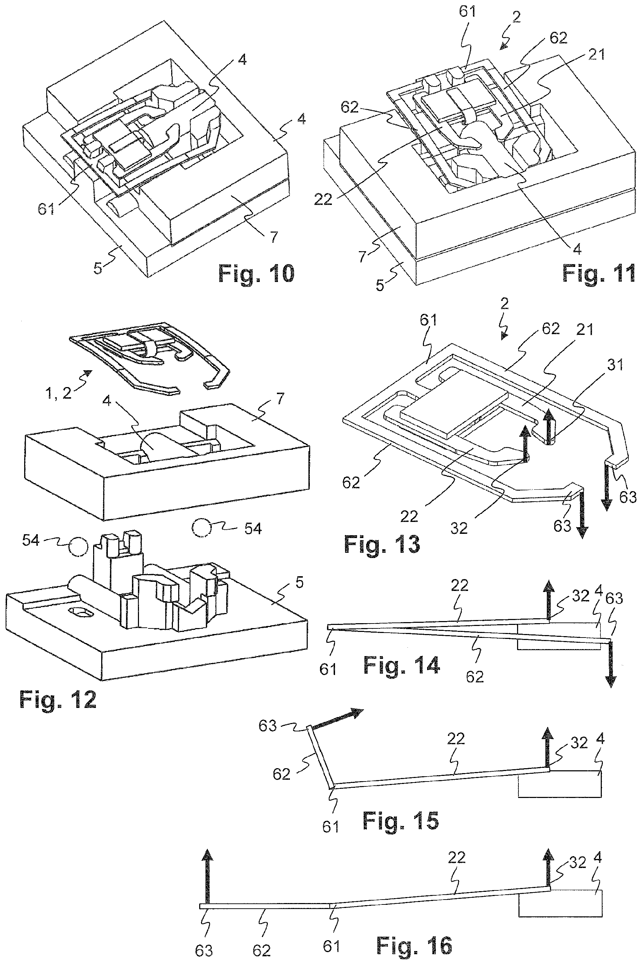

**Figure 1** shows a drive with an active element 1 comprising a resonator 2 with a pair of arms, a first arm 21 and a second arm 22, of which only the first arm 21 is in contact with and drives a passive element passive element 4. The arms 21, 22 and attachment regions 14 are attached to a connection region 20 of the resonator 2. The attachment regions 14 serve to mount the resonator 2 to another part, such as a base element 5 (illustrated in **Figures 7** to **12**) An excitation means 23, for example, a piezoelectric element, is arranged on the connection region 20. The excitation means 23 can comprise two separate elements, arranged on opposing sides of the excitation means 23 (visible in **Figures 11, 13****,** **18**). The resonator 2 and the excitation means 23 are flat elements, stacked onto one another and extending in parallel to a reference plane 28. Upon excitation by an alternating voltage with an excitation frequency, the arms 21, 22 oscillate and, depending on the frequency, a first contact element 31 of the first arm 21 is made to performs a roughly elliptical movement. Depending on the frequency, the movement can be clockwise (as illustrated by an arrow) or counter clockwise. Thereby, the first contact element 31 repeatedly contacts and drives a first contact area 41 of a passive element 4 relative to the active element 1. In this embodiment, the passive element 4, by bearing means not shown in the figure, can move along a linear movement axis 26.

The first arm 21 and second arm 22 extend from the connection region 20 in a substantially symmetric manner, and can differ in details of their shape, in particular their contour, if they are manufactured from a flat piece of material. A resonator axis 24 corresponds to an axis of symmetry at which the resonator 2, in particular the connection region 20 and the arms 21, 22, can be mirrored, except for the abovementioned details of the arms. Movement of the connection region 20 and the arms 21, 22, when excited by the excitation means 23, can be generally symmetric, with the same axis of symmetry. Nodes of this movement, that is, regions of minimal movement, can be located on the resonator axis 24. Attachment regions 14 for mounting the active element 1 on another element, can also be located on the resonator axis 24.

**Figure 2** shows a resonator with a pair of arms in a different arrangement: while in **Figure 1** the arms 21, 22 extend in parallel to the resonator axis 24, in **Figure 2** they extend at a right angle to the resonator axis 24. The resonator 2 can be arranged to drive only one passive element 4 (not shown in **Figure 2**) with only the first arm 21, the second arm 22 serving to balance the movement of the first arm 21.

**Figure 3** shows a drive with, in addition to the elements already presented, a bearing arm 8 acting as a bearing, supporting a passive element 4 which in this case is arranged to rotate relative to the active element 1. Here too, driving the passive element 4 is effected by the first contact element 31 contacting and driving a first contact area 41 of the passive element 4 by oscillating movements. Simultaneously, a bearing region 81 of the bearing arm 8 oscillates towards and away from the passive element 4. In **Figure 3**, this movement is represented by a double arrow. In this manner, the bearing arm 8 reduces contact forces acting on the passive element 4 while the first contact element 31 drives the passive element 4. Thereby, movement of the passive element 4 is facilitated.

The movement of the bearing arm 8 and thereby of the bearing region 81 can be synchronised with the movement of the first arm 21 by adjusting the length of the bearing arm 8. Given two oscillating frequencies for driving the first arm 21 to move the passive element 4 in the two opposite directions, the length of a bending section 84 of the bearing arm 8 can be chosen such that for both of these two frequencies the bending section 84 oscillates to move the bearing region 81 as described above. The two frequencies can be chosen close to one another, such that the first arm 21 oscillates in different directions according to the frequency, but the mode of oscillation of the bearing arm 8 is essentially the same for both frequencies.

Depending on the excitation frequency, the bearing arm 8 will exhibit corresponding modes of oscillation. Such a mode can be characterised by the location of nodes of the oscillation. For example, there can be at least three nodes:
- one near a point where the bearing arm 8 is attached to the connection region 20, for example at the C-shaped bend in Figure 3;
- one near a point where the bearing arm 8 changes direction, for example at the L-shaped bend in Figure 3; and
- one near the bearing region 81.

When the drive is not excited, the bearing arm 8 is at rest and exerts a pre-stress force that pushes the passive element 4 towards and against the first contact element 31, and thereby inhibits movement of the passive element 4.

**Figures 4-6** show different arrangements of arms for this type of drive in a very schematic representation. **Figure 4** corresponds to the arrangement of **Figure 3**, the arms running in parallel to the resonator axis 24. **Figure 5** represents an arrangement in which the arms running at right angles to the resonator axis 24. **Figure 5** represents an arrangement in which the arms are arranged in a point wise or 2-fold rotational symmetry. In these arrangements, the oscillations of the two arms can balance one another.

**Figures 7-9** show different arrangements with pre-stress elements, in a highly schematic representation. Each shows a kinematic chain, from the active element 1 to the passive element 4, with the active element 1 being linked to a base element 5 and the passive element 4 being linked to a driven part 7 (Generally, this association is a matter of convention: depending on the point of view, the active element 1 can be considered to be linked to a driven part and the passive element 4 to a base element). The base element 5 and driven part 7 are linked by a joint such as a linear joint 52, or planar joint completing the chain. The joint can be implemented with rollers 54 between the base element 5 and driven part 7. The chain comprises a resilient pre-stress element 6 for exerting a force between the active element 1 and the passive element 4 and also on the joint. The pre-stress element 6 can be arranged at one of various locations along the chain.
- According **to** **Figure 7**, the pre-stress element 6 is arranged between two parts of the base element 5, or between the base element 5 and the active element 1.
- According to **Figures 8** and **9**, it is arranged between two parts of the driven part 7, or between the driven part 7 and the passive element 4. In **Figure 8**, the direction of movement or linear movement axis 26 of the passive element 4 relative to the active element 1 is normal to the active element's 1 resonator axis 24, in **Figure 9**, it is parallel.

The pre-stress elements 6 not only exert a pre-stress force between the active element 1 and the passive element 4, but also on the joint between the driven part 7 and the base element 5. If rollers 54 are present in the joint, the pre-stress force also acts on them. The pre-stress force pushes the driven part 7 and base element 5 towards each other. This allows to simplify the construction of the joint, since elements that would otherwise be necessary to hold the driven part 7 and base element 5 in place against one another can be omitted.

In other embodiments there can be two or more pre-stress elements 6.

In other embodiments, a rotary or a spherical joint is present between the base element 5 and driven part 7, with a limited range of angular movement and with rollers on one side of the joint only. This corresponds to an arrangement as that of **Figure 7** but with facing sides of the driven part 7 and base element 5 forming concentric cylinders or spheres, separated by the rollers 54.

**Figures 10-12** show views of a drive unit in which a pre-stress force holds a base element 5 and a driven part 7 together, as explained above with reference to **Figures 7-9****.** A difference from these figures is that both arms of the resonator 2 contact the passive element 4, by means of a first contact element 31 on the first arm 21 and a second contact element 32 on the second arm 22. Two rollers 54 are shown in the exploded view of **Figure 11**. Instead of a third roller, a sliding contact is present between the base element 5 and driven part 7.

**Figure 13** shows a resonator 2 with an integral counterforce section 62 for generating the pre-stress force, as used in the arrangement of **Figures 10-12****.** In addition to the connection region 20 with arms 21, 23, the resonator 2 also comprises counterforce sections 62, which can be integrally shaped with the other parts of the resonator 2. When mounted in the driven part 7, the resonator 2 is free to rotate - to a certain extent - around a pivot section 61 of the resonator 2. The resonator 2 and in particular the counterforce sections 62 and a pivot section 61 are elastically deformed, as shown in **Figures 10** to **12**, by forces acting on the contact elements 31 and 32 an on force application regions 63 at which the counterforce sections 62 are clamped under corresponding parts of the base element 5. This elastic deformation corresponds to the pre-stress force that is exerted, on the one hand, between the first contact element 31, second contact element 32 and the passive element 4. On the other hand the pre-stress force is exerted, by pressing the passive element 4 and the entire driven part 7 downward towards the base element 5, onto the rollers 54 of the joint between the driven part 7 and base element 5.

**Figures 14-16** show different configurations of the counterforce section 62 in a schematic representation. **Figure 14** shows the configuration of **Figure 13**, with the arms 21, 22 being parallel to the counterforce section 62 and the reference plane 28 when not loaded, and bent apart from one another at the pivot section 61 when loaded by the forces acting on the contact elements 31, 32 and the force application regions 63. **Figure 15** shows a configuration in which the counterforce section 62 extends upwards at an angle to the arms 21, 22. In another embodiment, it extends downwards at an angle. **Figure 15** shows a configuration in which the counterforce section 62 extends in parallel to the arms 21, 22 but in the opposite direction when not loaded.

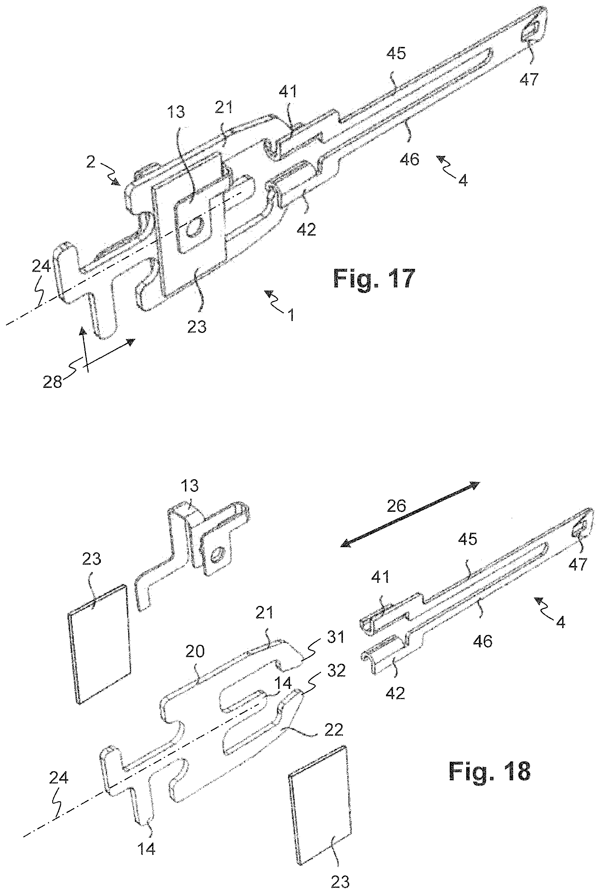

**Figure 17** shows a drive unit in which the active element contacts and drives a concave region of the passive element, and **Figure 18** shows the same, in an exploded view. The active element 1 comprises elements as already presented above. The passive element 4 comprises a attachment sections and an attachment hole 47 for attaching it to, for example a driven part 7 or base element 5. A first attachment section 45 supports a first contact area 41 and a second attachment section 46 supports a second contact area 42. Each contact area 41, 42, and optionally the entire passive element 4 is manufactured from a flat part of a sheet material, for example, sheet metal. The contact areas 41, 42 are bent to form a concave shape, in particular a U-shape. Each contact element 31, 32 is arranged to contact a respective contact area 41, 42 by reaching into this concave shape. The passive element 4 can be driven to move along the linear movement axis 26. The attachment sections 45, 46 are relatively stiff in the movement direction and relatively elastic in directions normal to the linear movement axis 26. This allows the drive to absorb misalignment and movement in these directions. At the same time, the concave shape of the respective contact area 41, 42 keeps the contact elements 31, 32 within the contact area 41, 42.

**Figure 17** also shows a contact element 13 clamping two piezo plates constituting the excitation means 23 against the connection region 20. Electrical contacts for driving the piezo plates are constituted on the one hand by the contact element 13 and on the other hand by the resonator 2 and its attachment regions 14.

In other embodiments, not shown in the figures, the second arm 22 does not come into contact with a corresponding second contact area 42. The passive element 4 is thus driven only by the first arm 21.

While the invention has been described in present embodiments, it is distinctly understood that the invention is not limited thereto, but may be otherwise variously embodied and practised within the scope of the claims.

## Claims

1. **A drive unit** for driving a passive element (4) relative to an active element (1), wherein the active element (1) comprises
a resonator (2) and at least one excitation means (23) for exciting oscillations in the resonator (2),
the resonator (2) comprising at least two arms (21, 22) extending from a connection region (20) of the resonator (2),
the connection region (20) and the arms (21, 22) extending in parallel to a reference plane (28),
a first arm 21 of the arms (21, 22) comprising, at an outer end of the arm, a contact element (31),
the contact element (31) being movable by way of oscillating movements of the first arm 21,
the passive element (4) being arranged to be driven and moved relative to the active element (1) by way of these oscillating movements;
the passive element (4) comprises a first contact area (41), the first contact area 41 being arranged to be in contact with the first contact element 31;
wherein the at least two arms (21, 22) extend in a substantially symmetric manner from the connection region (20);
wherein the resonator (2) and its parts are integrally shaped as a single piece of material;
**characterised in that**
the second arm (22) is arranged not to come into contact with the passive element (4).

2. The drive unit of claim 1, wherein the second arm (22) is arranged to move with oscillating movements that balance the oscillating movement of the first arm (21).

3. The drive unit of claim 1 or claim 2, wherein the first arm (21) and second arm (22) are arranged in (2)-fold rotational symmetry to one another, with an axis of symmetry being normal to the reference plane (28).

4. The drive unit of claim 1 or claim 2, wherein the first arm (21) and second arm (22) are arranged in mirror symmetry to one another, with a mirror plane being normal to the reference plane (28), the first arm (21) and second arm (22) being arranged at opposite sides of the mirror plane and
• either the first arm (21) and second arm (22) extend in a direction normal to the mirror plane (28),
• or the first arm (21) and second arm (22) extend in a direction normal to the mirror plane (28).

5. The drive unit of one of the preceding claims, wherein the active element (1) comprises, in addition to the first arm (21) and second arm (22), a bearing arm (8), the bearing arm (8) comprising a bearing region (81) by means of which, in particular when the active element (1) is not being excited, the bearing arm (8) applies a pre-stress force on the passive element (4) against the first arm (21), in particular the first contact element (31) of the first arm (21).

6. The drive unit of claim 5, wherein, when the active element (1) is excited, with a frequency for driving the passive element (4) relative to the active element (1) by means of the first arm (21), the bearing arm (8) oscillates without imparting forces to the passive element (4) that drive the passive element (4) relative to the active element (1).

7. The drive unit of claim 6, wherein, when the active element (1) is excited, with a frequency for driving the passive element (4) relative to the active element (1) by means of the first arm (21), a bearing region (81) of the oscillating bearing arm (8) alternatingly moves towards the passive element (4), thereby coming into contact with the passive element (4), and away from the passive element (4), thereby losing contact with the passive element (4) and thus decreasing the friction force in the bearing region (81).

8. Method for operating a drive unit according to one of claims 5 to 7, comprising the steps of exciting the active element (1) with a frequency
• for driving the passive element (4) relative to the active element (1) by means of the first arm (21) by performing an oscillating movement that, and
• for intermittently holding and releasing the passive element (4) relative to the active element (1) by means of the bearing arm (8).

9. A drive unit for driving a passive element (4) relative to an active element (1), **optionally according to one of the preceding claims,** wherein the active element (1) comprises
a resonator (2) and at least one excitation means (23) for exciting oscillations in the resonator (2),
the resonator (2) comprising at least one arm (21, 22) extending from a connection region (20) of the resonator (2),
the connection region (20)and the at least one arm (21, 22) extending in parallel to a reference plane (28),
the at least one arm (21, 22) comprising, at an outer end of the arm, a contact element (31),
the contact element (31) being movable by way of oscillating movements of the at least one arm 21,
the passive element (4) being arranged to be driven and moved relative to the active element (1) by way of these oscillating movements;
the passive element (4) comprises a first contact area (41), the first contact area (41) being arranged to be in contact with the first contact element (31); **characterised in that**
a resilient pre-stress element (6) is arranged to apply a pre-stress force pushing, in particular when the active element (1) is not being excited, at least the first contact element (31) towards the first contact area (41), and **in that**
the passive element (4) is held in place against the active element (1) by means of the pre-stress force.

10. The drive unit of claim 11, wherein the passive element (4) and the active element (1) are arranged to move a driven part (7) relative to a base element (5), the driven part (7) being partly constrained in its movement relative to the base element (5) by means of a joint (51, 52, 53), and the passive element (4) is held in the joint by means of the pre-stress force.

11. The drive unit of claim 10, wherein the joint is a rolling joint comprising rollers arranged between the base element (5) and the driven part (7).

12. The drive unit of one of claims 9 to 11, wherein the joint (52, 53) allows for relative movement of the driven part (7) relative to the base element (5) along a linear axis or within a plane, and limits the relative movement in a direction that is normal to said linear axis or plane, and does not constrain the relative movement in the opposite direction, and wherein the pre-stress force constrains the relative movement in the opposite direction.

13. The drive unit of one of claims 9 to 11, wherein the joint (51) allows for relative movement of the driven part (7) relative to the base element (5) around an axis of **rotation**, and limits the relative movement in a direction that is normal to said axis of rotation, and does not constrain the relative movement in the opposite direction, and wherein the pre-stress force constrains the relative movement in the opposite direction.

14. A drive unit for driving a passive element (4) relative to an active element (1), **optionally according to one of the preceding claims,** wherein the active element (1) comprises
a resonator (2) and at least one excitation means (23) for exciting oscillations in the resonator (2),
the resonator (2) comprising at least two arms (21, 22) extending from a connection region (20) of the resonator (2),
the connection region (20) and the arms (21, 22) extending in parallel to a reference plane (28),
each of the arms (21, 22) comprising, at an outer end of the arm, a respective contact element (31, 32),
the contact elements (31, 32) being movable by way of oscillating movements of the respective arm (21, 22)
the passive element (4) being arranged to be driven and moved relative to the active element (1) by way of these oscillating movements;
the passive element (4) comprises a first and a second contact area (41, 42), each contact area (41), (42) being arranged to be in contact with a respective one of the first and second contact elements (31), (32),
**characterised in that**
the resonator (2) comprises
• a pivot section (61) about which the resonator (2) is arranged to rotate relative to the base element (5),
• a counterforce section (62) comprising a resilient part of the resonator, which when mounted on the base element (5) is elastically deformed by a pre-stress torque around the pivot section (61), caused by a pre-stress force acting between the resonator (2) and the passive element (4) at the contact areas (41), (42).

15. The drive unit of claim 14, wherein the counterforce section (62), in particular when not deformed, extends within the reference plane (28) at the same side of the pivot section (61) as the arms (21), (22).

16. A drive unit for driving a passive element (4) relative to an active element (1), **optionally according to one of the preceding claims,** wherein the active element (1) comprises
a resonator (2) and at least one excitation means (23) for exciting oscillations in the resonator (2),
the resonator (2) comprising at least two arms (21, 22) extending from a connection region (20) of the resonator (2),
the connection region (20) and the arms (21, 22) extending in parallel to a reference plane (28),
at least one of the arms (21, 22) comprising, at an outer end of the arm, a contact element (31, 32),
the contact element (31, 32) being movable by way of oscillating movements of the at least one of the arms (21, 22),
the passive element (4) being arranged to be driven and moved relative to the active element (1) by way of these oscillating movements;
the passive element (4) comprises at least one contact area (41, 42), the at least one contact area (41, 42) being arranged to be in contact with a respective contact element (31, 32);
**characterised in that**
the at least one contact area (41, 42) has a concave shape, with two inner surfaces opposing one another, with the respective contact element (31, 32) being arranged to move between the two inner surfaces and make contact at the two inner surfaces.

17. The drive unit of claim 16, wherein the at least one contact area (41, 42) has a U-shape, with two arms, and wherein the respective contact element (31, 32) is arranged to move between the two arms of the U-shape and make contact at inner surfaces of the two arms of the U-shape, and in particular wherein the at least one contact area (41, 42) is manufactured in one piece as a bent piece of sheet metal.
